# EUROPEAN PATENT SPECIFICATION

(11) **EP 1 807 740 B1**
(45) Date of publication and mention of the grant of the patent: **09.09.2009**
(21) Application number: 05796515.4
(22) Date of filing: 12.09.2005
(51) Int. Cl.: G05B 19/4093

(54) **SYSTEM, METHOD, AND COMPUTER PROGRAM PRODUCT FOR MACHINE TOOL PROGRAMMING**
SYSTEM, VERFAHREN UND COMPUTERPROGRAMMPRODUKT ZUR MASCHINENWERKZEUG-PROGRAMMIERUNG
SYSTEME, PROCEDE, ET PROGICIEL POUR LA PROGRAMMATION DE MACHINE-OUTIL

(30) Priority: 14.09.2004 US 609777 P; 09.09.2005 US 223453
(43) Date of publication of application: 18.07.2007
(73) Proprietor: Siemens Product Lifecycle Management Software Inc., Plano, TX 75024 (US)
(72) Inventor: SUDERMAN, Stanley, W., Buena Park, CA 90620 (US)
(74) Representative: Lawrence, John
(86) International application number: PCT/US2005/032583
(87) International publication number: WO 2006/031821

(56) References cited:
- US-A- 5 168 609
- SPENCE A D ET AL: "Integrated solid modeller based solutions for machining" COMPUTER AIDED DESIGN, ELSEVIER PUBLISHERS BV., BARKING, GB, vol. 32, no. 8-9, August 2000 (2000-08), pages 553-568, XP004203527 ISSN: 0010-4485
- VOSNIAKOS G ET AL: "Multiple tool path planning for NC machining of convex pockets without islands" ROBOTICS AND COMPUTER INTEGRATED MANUFACTURING, PERGAMON PRESS, OXFORD, GB, vol. 16, no. 6, December 2000 (2000-12), pages 425-435, XP004217993 ISSN: 0736-5845

## Description

### TECHNICAL FIELD OF THE INVENTION

The present invention is directed, in general, to machine tool control, and in particular, to control of numerically-controlled (NC) machine tools.

### BACKGROUND OF THE INVENTION

Today's state-of-the-art NC machines allow for two or even more tools to be working at the same time. For instance, with a four-axis machine, it is possible to have two separate tools engaged in the workpiece at the same time. This presents great opportunities for maximizing metal removal, and manufacturing experts therefore tend to put effort in optimizing multiple-tool processes.

Most multiple axes turning machine tools require separate NC programs for each tool, others operate on NC programs which consist of multiple blocks of NC commands for the respective tools. Such programs contain wait codes (synchronization points) which synchronize the turrets to start the subsequent commands simultaneously. For instance, one tool has to wait until another tool completes its part of the task (i.e. reaches the same time mark), and at that time they continue working simultaneously again.

Today, multi-tool machines are commonly used where the spindles oppose each other so that a part can be completely machined on both ends. However, machines do exist which may have four or more synchronized tools.

There is, therefore, a need in the art for a system, method, and computer program product for efficient machine tool programming.

XP004203527, Integrated solid modeller based solutions for machining, COMPUTER AIDED DESIGN, ELSEVIER PUBLISHERS BV., BARKING, GB, 2000-08-00, ISSN 0010-4485, VOL 32, NR 8-9, PG 553-568 discloses such a multi tool machine program. US 6112133 discloses a visual system and method for generating a program for machining parts having planar and curvilinear surfaces.

### SUMMARY OF THE INVENTION

According to an aspect of the invention, there is provided a method for developing numerically-controlled machine programs, comprising:
receiving program paths for a plurality of machine tools;
   performing post processing on the program paths to produce post-processed data;
   displaying a simulation of the operation of at least one machine tool according to the post-processed data;
   receiving synchronization data corresponding to the program paths; and
   characterized by storing the synchronization data separately from the program paths, wherein the synchronization data is automatically re-applied to the program path when the program path is edited or regenerated.

According to another aspect of the invention, there is provided a data processing system having at least a processor and accessible memory, comprising:
means for receiving program paths for a plurality of machine tools;
means for performing post processing on the program paths to produce post-processed data;
means for displaying a simulation of the operation of at least one machine tool according to the post-processed data;
means for receiving synchronization data I corresponding to the program paths; and
characterized by means for storing the synchronization data separately from the program paths, wherein the synchronization data is automatically re-applied to the program path when the program path is edited or regenerated.

According to a computer program product tangibly embodied in a machine-usable medium, comprising:
computer-executable instructions for receiving program paths for a plurality of machine tools;
computer-executable instructions for performing post processing on the program paths to produce post-processed data;
computer-executable instructions for displaying a simulation of the operation of at least one machine tool according to the post-processed data;
computer-executable instructions for receiving synchronization data corresponding to the program paths; and characterized by computer-executable instructions for storing the synchronization data separately from the program paths, wherein the synchronization data is automatically re-applied to the program path when the program path is edited or regenerated.

Before undertaking the DETAILED DESCRIPTION OF THE INVENTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases.

### BRIEF DESCRIPTION OF THE DRAWINGS

For a more complete understanding of the present invention, and the advantages thereof, reference is now made to the following descriptions taken in conjunction with the accompanying drawings, wherein like numbers designate like objects, and in which:

FIGURE 1 depicts a block diagram of a data processing system in which a preferred embodiment can be implemented;

FIGURE 2 depicts a simplified block diagram of a numerically-controlled machine, in accordance with an exemplary embodiment of the present invention; and

FIGURE 3 depicts a flowchart of an exemplary process performed by a data processing system in accordance with a disclosed embodiment.

### DETAILED DESCRIPTION OF THE INVENTION

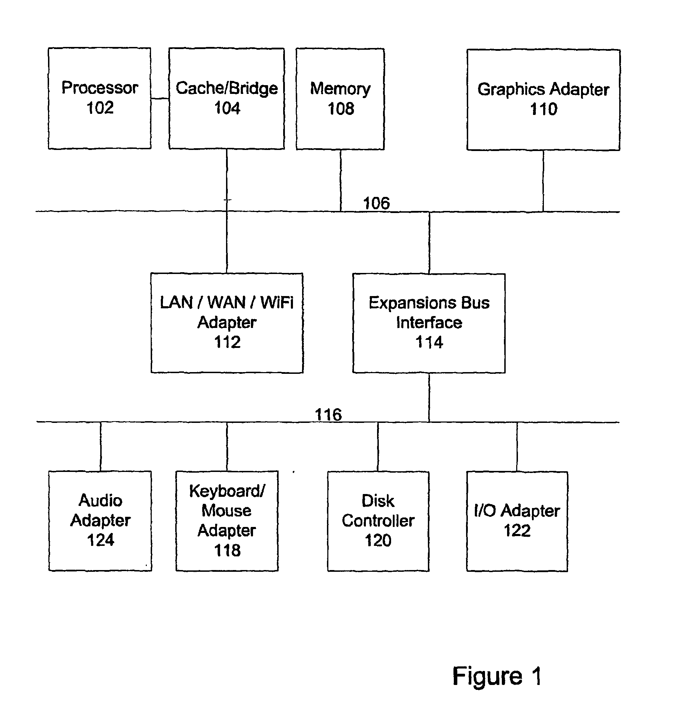

FIGURES 1 through 3, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged device. The numerous innovative teachings of the present application will be described with particular reference to the presently preferred embodiment.

Merging lathes, mill/turns, and similar NC machines are special machines that normally contain two or more cutting heads and each head or tool must be programmed separately. The difficulty occurs when these heads must be synchronized so that they work simultaneously. This requires the insertion of special codes and the visualization of the machine tool so that the user can determine the precise line of code and cutting time that must be taken into account when programming these machines.

In order to insure that the machine tool is being simulated properly it must be driven of the post-processed file (sometimes referred to as G & M codes) so that the exact machine sequences and motions can be verified. If this sequence is not properly timed, the resulting program can lead to machine collisions or improper cutting of the part leading to scrap parts.

In a disclosed embodiment, after the initial programming of the paths, the user can call a synchronization manager, which can be implemented as a stand-alone application or as a module in another data processing system application. The synchronization manager module is used to modify the program paths for each desired head, turret, or other tool, and internally posts these files to create actual machine code, preferably as the well-known "G&M codes."

These post processed paths are then used in a machine tool simulation program, in various embodiments, which is preferably displayed inside or alongside the synchronization manager application to display the exact motions of each programmed machine tool.

The user can then, optionally, manually edit the path program to add or change any sync codes and/or wait codes that are need to pause or start the head motion. The user can then view his program, make iterative changes to his program, or develop additional cutter paths while viewing the motions of the machine tool(s) in the synchronization manager.

The synchronization manager, in a preferred embodiment, combines the tool path creation step, the post processing step and the simulation step into one step in which the user programs the part, simulates the machine tool motion (based on post process code) and synchronizes the output under a single mechanism. This gives the user a verified output, in a conventional format that can then be run directly on the physical machine tool.

The sync manager uses industry standard posted files so that most users who are familiar with machine tools immediately understand the motion and function of each of the G & M codes.

In conventional systems, the user is forced to post each tool path separately and then manually edit into the file the synchronization marks. Then the file could be run through simulation systems to verify the output. Various disclosed embodiments, however, preferably does this work in one step by combining and integrating all of these steps into one.

A preferred embodiment allows users to easily and effectively apply synchronization states to tool paths when programming any type of NC machine tool, including any type merging lathe from Vertical Turret Lathes (VTLs) (single spindle with two independent turrets/rams) to complex production centers (multiple spindles and multiple independent turrets). A preferred embodiment provides motion simulation and tool, turret, and spindle control that is characteristic of this machining environment.

Preferably, the system provides the user with an interactive process for synchronizing multiple turret motion sequences (multiple tool paths), including real-time simulation of the motion during the interaction.

Definitions: Following are short definitions of the usual meanings of some of the technical terms which are used in the present application. (However, those of ordinary skill will recognize whether the context requires a different meaning.) Additional definitions can be found in the standard technical dictionaries and journals.

A tool carrier or carrier is a general term used herein to refer to the hardware device on a lathe or other machine where cutters are mounted or loaded. Specifically, this includes turrets, rams, or heads.

Turret: A turret is a device (carrier) that has one or more tools mounted onto its various faces or tool holding locations. As the turret moves on the lathe, it moves one of the tools to cut the part. A lathe turret is a device that is mounted on a movable slide. Cutting tools are mounted on the turret and each tool is brought into cutting position by indexing the turret.

A turret will index to bring a tool into a desired cutting position. For a turret, a tool change may mean that: #1) the turret may index to bring a different tool into cutting position, or #2) the turret may index to bring the same tool into a new cutting position, or #3) the turret may not index, but a different tool will be used for the next cutting. Preferably, and in some embodiments, the second tool change case (#2) is controlled by a lathe tool axis change and is not considered as a tool change.

According to the turret definition above, the gang tools used on many Swiss-style lathes would be interpreted as being mounted on turrets. In this case the turret indexes in a linear motion to bring the desired tool into position, rather than rotary motion.
A ram is a device (carrier) that receives the cutting tool from a tool changer (automatic or manual) and then moves the tool to perform cutting of the part. A ram holds one or more tools, but does not rotate. Tools may be changed on a ram using a tool changer. It is possible to load a tool block into a ram which may have multiple tools mounted onto the block. For a ram, a tool change may mean that: #1) a tool is loaded by the tool changer into the ram, or #2) one of the other tools that is already loaded into the ram should now be used for cutting.

Preferably, each tool is assigned to a carrier, so that the disclosed system can determine whether two specified tools are eligible for simultaneous cutting or not. The system preferably uses definitions as above to determine what constitutes a tool change on a lathe or other machine. In this way, the system can properly display tool changes when they are needed.

During each tool's definition, the tool will be assigned to a location and orientation on an available carrier of the machine. This information will be used by the system to identify which carrier is being moved or driven by the operation's tool path.

A machine tool definition is used to describe the kinematics and characteristics of the machine. For example, the machine tool definition for lathes includes the number of tool carriers (turrets/rams) available on the machine and information about each carrier's mounting conditions for tools.

A tool carrier description is also used for each appropriate tool and tool carrier. For machines with rams that can perform tool changes (*i*.*e*., replace the tool), there may be multiple tools loaded at the time of the tool change. In this case, each tool is preferably defined separately, with separate offsets, but with the same tool number. Other turret characteristics can be defined with the turrets, including turret shape and size (modeled); size of the turret work envelope for movement; the number and designation of the programmable positions or faces; location of the turret reference point(s); which positions on the turret can accept live tooling; any inter-turret dependencies; any spindle-turret dependencies (e.g., whether a spindle is mounted on a turret); an identification of which spindle(s) a turret can access; the axes of movement of the turret (Swiss-style lathes) and defined turret kinematics; turret favorability to outside diameter (OD) work or inside diameter (ID) work or neither; any the pre-defined HOME position(s) for the turret; whether any tools are pre-mounted on the turret as part of the turret definition, and which; whether a parts catcher mounted is on a turret, and where; any potential interference between turrets, *e*.*g*., if a parts catcher will interfere with one of the turrets; and descriptions of steady rests and follower rests. If a follower rest is mounted on a turret, it must be considered as a synchronizable device.

Following is a description of the system context for both the disclosed system, method, and computer program product and the NC machine environment in which the synchronized tool-path programs can be used.

Figure 1 depicts a block diagram of a data processing system in which a preferred embodiment can be implemented. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110.

Other peripherals, such as local area network (LAN) / Wide Area Network / Wireless (*e*.*g*. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular. For example, other peripheral devices, such as an optical disk drive and the like, also may be used in addition or in place of the hardware depicted. The depicted example is provided for the purpose of explanation only and is not meant to imply architectural limitations with respect to the present invention.

A data processing system in accordance with a preferred embodiment of the present invention includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present invention as described.

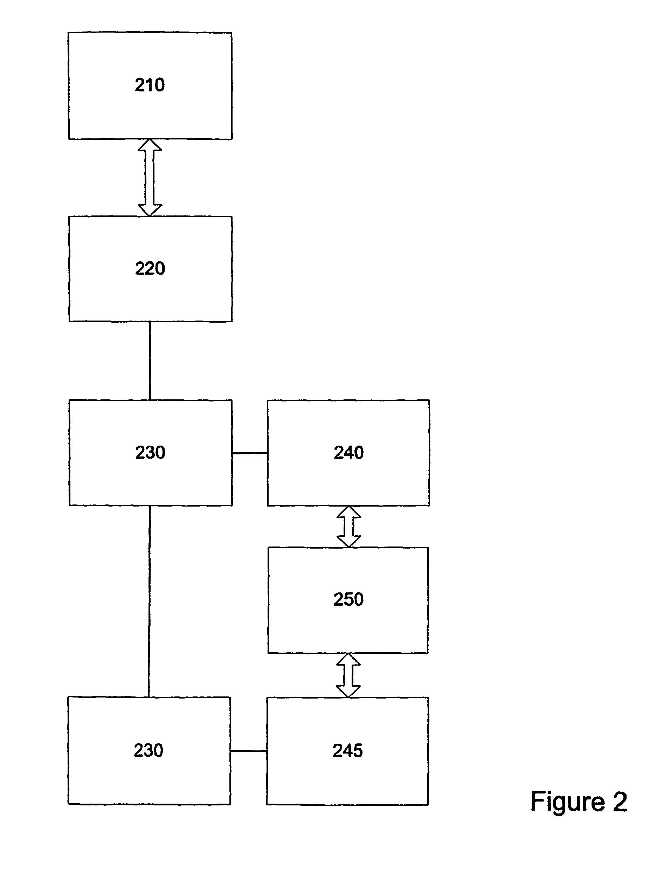

Figure 2 depicts a simplified block diagram of a numerically-controlled machine, in accordance with an exemplary embodiment of the present invention. Here, data processing system 210, which can be implemented as a data processing system as shown in Figure 1, is connected to control machine 220. Machine 220 operates tools 240 and 245, fastened by carriers 230. Tools 240 and 245 operate on work-piece 250, as described herein. In a preferred embodiment tools 240 and 245 can operate separately or simultaneously, as specified by a tool path program running on machine 220 or data processing system 210. In other embodiments, additional tools can also be operated by machine 220. This simplified machine configuration is well known to those of skill in the art, and provides a system context for various embodiments of the invention describes herein.

To simplify the description and explanation, the basics of functionality will be described for an exemplary embodiment having a single spindle lathe with two carriers (turrets), which can be viewed as a specific case of the simplified system in Figure 2. Additional functionality will be described for multiple spindle machines with more carriers (turrets).

For purposes of description two terms are used as will be understood by those of skill in the art. "Process order" refers to the order by which an individual, discrete part is machined through progressive material removal. In this discussion, the process order is confined to a single machine or single setup. "Real-time order" refers to the order of events as performed chronologically or by the clock, and as observed at run-time (program cycle) of the merging lathe. Note that for non-merging, non-simultaneous machining, the process order and the real-time order would be the same.

As a first exemplary embodiment, the simplest merging lathe to program would be a single spindle machine with two independent carriers (turrets or rams). Most merging Vertical Turret Lathes (VTL) are good examples of this case. To illustrate the basics for programming a merging lathe, the following description highlights the user's workflow for this simple case:

1. Programming the Job: A sequence of operations is created to cut the part using whatever tools are required from both tool carriers. The order of the operations (in a program order view) is dictated by the natural machining progression and removal of the material from the part, and according to the formation of the In-Process Workpiece (IPW). This program represents the process order of machining the part, as described above. Obviously, much programming variation could be possible in this order of operations. The In-Process Workpiece (IPW) is a term given to a graphics-geometry, shape that represents the physical workpiece, in the data processing system, at each or any stage of the machining process.

2. Viewing the Turret Motion: Once the machining process order is established and the operations are created and generated in the program, the user will switch to an interactive function where the motion (tool paths) are organized into two chronological lists, one list per turret. Initially, the order of the tool paths in each list for each respective turret is dictated by their order in the program.

3. Synchronization of Turrets: At this stage, the user interacts with these two turret motion lists on the data processing system and can do any of the following that seem appropriate to accomplish the synchronization:

3a) Sync Markers: Designate a synchronized time start position for both turrets. The user can place or edit a sync marker in one turret motion list and a matching sync marker in the other turret motion list where he wants synchronized cutting to start or end. The system will re-align the lists chronologically according to the description 4a) below.

3b) Wait Markers: Designate a time position where one turret or multiple turrets should wait or pause until a time position in the other turret(s) is achieved. The wait can also be expressed as a dwell in seconds or revolutions, as an option. In contrast to the sync marker that makes a turret wait until a certain event on the other turret(s) has occurred, a wait marker represents a dedicated user-defined time span for which the turret in question is intended to wait until it can resume its work.

3c) Primary Turret: During any time span when multiple turrets are cutting simultaneously on the spindle (synchronized or not), one of those turrets is preferably designated as the primary turret for the sake of surface speed control by the controller. The system will clearly indicate which turret is the primary turret as well as the time span where that primary turret status applies.

3d) Target Paths: The user can select a target tool path in each list, which will be displayed on the graphics screen. Once displayed, the user can select a cutter position in the list or on the screen, the tool will be displayed there, and the user is able to add sync or wait markers at those positions.

3e) Single Step: The user can advance or back up the tool (replay) along the path using a convenient single step function.

3f) Intermediate Position: The user can highlight an individual move and then, using a separate slider, can introduce an intermediate tool position within that move for fine synchronization. This capability is preferably limited to linear moves only.

3g) Localized Simulation: The user can easily select and simulate (replay) any sub-section of the full cutting chronology at any time. Once the user has designated a START 'time' for simulation, the RESET button will return to the START position, not the beginning of the tool path. This makes it easy to repeat the simulation.

4. System Behavior During Synchronization.

4a) Automatic Re-alignment: As a result of applying sync and wait markers (items 3a and 3b above) in the motion lists, the system re-aligns the affected lists to chronologically match each other.

4b) Spindle Control. The system verifies that the spindle rotation direction, as dictated by the primary tool, is compatible to all tools that may be cutting simultaneously on that same spindle.

4c) Time Calculations: The system calculates and displays the time duration for each move in the tool paths. This is preferably a very 'close calculation and so the system needs to know about any maximum RPM limits that are imposed. The time calculation for subordinate (non-Primary) tools is dependent on the spindle speed determined by the Primary tool. Necessary calculation factors are, in a preferred embodiment: feed rates, surface speed or RPM, acceleration/deceleration per axis, tool change, other user-defined events, and circular feed rate compensation.

4d) Display of Control Markers: The system clearly displays the sync and wait markers within the tool path lists.

5. Final Simulation: Once all synchronization has been completed, the user can ask the system to perform a real-time simulation of the complete synchronized motion of all turrets from beginning to end of program.

Multiple Spindles and More Turrets: Machines with multiple spindles and multiple turrets come in a tremendous variety of configurations and are often called Production Centers. Most of them with multiple turrets (some with rams) have the ability to do synchronized cutting. The functionality of various embodiments provides programming support for all known configurations of these machines. The quantity of spindles and the quantity of turrets is completely flexible and should not present any limitations.

All of the basic functionality described for a single spindle machine is available, but additional functionality is provided to handle multiple spindle machines. Likewise, it is important to describe, in this second exemplary embodiment, how the user can accomplish synchronization of more than two turrets using a system in accordance with various embodiments of the present invention.

1. Programming the Job: As with the single spindle case described above, a sequence of operations is created to cut the part using whatever tools are required from all turrets. The order of the operations (in a program order view) is dictated by the natural machining progression and removal of the material from the part through the full sequence of spindles, and according to the formation of the IPW. Again, this program represents the process order of machining the part. This activity is the same as for the single spindle machine.

2. Viewing the Turret Motion: As with the single spindle case, the user can switch to an interactive session where the tool paths (motion) of the operations are organized into chronological lists per carrier (turret/ram).

3. Synchronization of Turrets: Again, at this stage, the user will interact with the carrier motion lists and may manipulate the lists as described in the single spindle case and with additional considerations as described below:

3a) Primary Turret: During any time span when multiple turrets are cutting simultaneously on any one spindle, one (and only one) of those turrets is preferably designated as the Primary turret for the sake of surface speed control by the controller. The system clearly indicates which turret is the Primary turret per spindle as well as the time span where that Primary status applies. The user can re-designate the Primary turret for any synchronized time span per spindle. Each spindle may have one designated turret as the primary.

3b) Tool Path Re-arrangement: Prior to any other fine synchronization activity, the user may need to re-arrange the tool paths as units within their respective turret list. This can be done for each turret, if desired, but this activity applies to lathes that have more than one spindle. However, in a preferred embodiment, the system does not allow the user to make a change that will violate any turret's original tool path order per spindle. Re-arranging the original tool path order (per spindle) must be done in the program order view.

For example, turret #2 may be used to cut on spindle #1 and on spindle #2. According to the process order, it would be programmed to cut on spindle #1 first, then on spindle #2 for the sake of the IPW. But in real-time machining, it may actually cut on spindle #2 earlier that cutting on spindle #1.

4. System Behavior During Synchronization

4a) Spindle Control: The system will verify that spindle rotation direction, as dictated by the primary turret, is compatible to all tools that may be cutting simultaneously on that same spindle (Req. 165). This rule will independently apply to all spindles.

4b) Synchronization: Prior to any synchronization, the system will consider that all turret activity will be output as recorded in the Program Order View. To accomplish simultaneous cutting, the user preferably synchronizes two turrets at a time. The user may choose various ways to synchronize many turrets. Consider, for example, a case with four turrets:

Variation #1. The user can synchronize turret #1 with turret #2, then synchronize turret #3 with turret #4, and finally synchronize the two pairs together by synchronizing turret #2 with turret #3, for example. In this way, all turrets are synchronized.

Variation #2. The user can synchronize turret #1 with turret #2, then synchronize turret #3 with turret #2, then turret #4 with turret #3. Again, all turrets are synchronized.

As can be seen, the disclosed embodiments provide the ability to synchronize an essentially limitless number of turrets, and give the user the freedom to choose the best way to do it.

Saving the synchronization data: All synchronization information is typically saved when the user specifies "OK" from the interactive synchronization dialog. Once the synchronization data has been stored, the session can be resumed at a later point, starting from the status achieved immediately before the data was stored.

Persistence of the synchronization data: Because the machine operations are so frequently marked as 'edited' and, therefore, need regeneration (primarily due to changes in the IPW), it is preferred that the synchronization data not be lost when an operation is regenerated. Preferably, the user should never be forced to repeat the synchronization effort just because an operation must be regenerated.

Therefore, the system will preferably store the synchronization data separate from, but relative to, each operation tool path. When an operation is regenerated and taken back into the interactive synchronization session, the previously defined synchronization data is automatically re-applied to the tool path as it was previously defined. In most cases where simple changes are made to the operations, this automatic re-application of the synchronization data will be satisfactory, or may require minor adjustments. In cases where major re-arrangement or modification is made to the operations (tool paths) in the program, the user may need to drastically rework the synchronization or possibly start over. In this context, the following functionality is provided. First, the user can easily move and modify synchronization markers in the tool paths within the interactive synchronization session. Also, the user can easily remove or clear the synchronization markers from a tool path, if desired. Further, one embodiment enables the user to define the conditions of the synchronization locations in the tool motion events so that they can reintroduced back into the tool motion as best as possible. Here, the user must specify BEFORE or AFTER, relative to some geometry.

Following describes some features of a simulation environment in accordance with various embodiments.

Machine Tool: A limited list of generic, multiple turret machine definitions are used with the system. The user will chose one of these machines and the following will become active in the programming setup.

Kinematics CSYS: A coordinate system (CSYS) will be introduced for each spindle on the physical machine. Each CSYS represents the axis-of-rotation of its respective spindle and the axis designations of that spindle. The CSYSs is located in space at a reasonable distance for viewing on the screen (generic). A machine coordinate system (MCS) is defined congruent to each kinematics CSYS and a corresponding Turn-Orient Object will be created in the Geometry View for each MCS. The user can modify the definition of each MCS by moving it along its respective spindle axis. As known to those of skill in the art, an MCS describes the local coordinate system with which the axis coordinates (G & M codes) will be output.

Parametric Turrets: Two or more generic turrets are parametrically defined (not modeled) and are available for assigning tools to them. For error detection purposes on multiple spindle machines, the user can designate that some turrets cannot reach or visit certain spindles. Preferably, the system can pre-define this characteristic in the definition of the machine. But for generic machines, the user may want to set this optional limit interactively. This restriction should actually be applied during the programming stage.

Multiple Simultaneous Carrier Movement: The system includes support for multiple simultaneous data channels. These data channels are synchronously controllable for proper synchronized motion simulation.

Tool Display: The basic system displays only the defined tools (currently cutting inserts only or library tools) when no other machine tool components are defined.

Spindle: During the simulation of the lathe program, the simulation graphically indicates the rotation of the spindle in the programmed direction (e.g., for ISV).

Full Simulation: In addition to the functionality described above in Basic Simulation, the system can also do the following:

Machine Tool Components: The user can model all the components of the machine tool and define the kinematics relationships between the components.

Collision Checking: The simulation can be configured from within the synchronization module such that collisions are displayed while the simulation is running. The user can define so-called collision pairs or the desired simulation speed without having to leave the synchronization module.

Post processing functionality -- events provided to postprocessing. The following events are preferably provided to postprocessing:

1. An event is provided at the start of program to inform the postprocessor that the program contains synchronization motion and events.

2. An event can be passed at the start of operation, which identifies the carrier on which the operation's tool is mounted/loaded.

3. Synchronization events preferably include a 'sync' identification number.

4. Wait events with no parameters except the identification number. These should be in pairs (matching ID numbers) but will be managed or matched in the interactive synchronization session.

5. An event that explicitly states when a carrier becomes a primary or not. Whether the carrier is a primary or non-primary must be output at the beginning of each operation.

Postprocessing preferably provides the following functionality:

1. The postprocessor ignores spindle speed data for non-primary turrets within a simultaneous cutting region.

2. The postprocessor is responsible for assigning the output sync numbers and adding required sync codes for machines that require codes for all carriers.

3. Three distinct forms of output are available. They are:

i. Okuma type - Program is within a single file. Each simultaneous section is identified with a "Pn" code and preceded by a "Gxx" carrier designation. The controller does the synchronization at the machine.

ii. Fanuc type - Program is split into separate files, each one representing the motion of an individual turret. Within each file, the synchronization is coordinated using matching M100 thru M999 codes. The controller does the synchronization at the machine. This style of programming is somewhat limited to two turrets.

iii. GE-, AB-, G&L-, Cincinnati-type - Program is within a single file. The postprocessor performs the synchronization processing and outputs alternating blocks of code that move the turrets as the blocks are sequentially read. The turrets are individually driven using distinct axis word addresses, such as: Z and X, U and V, etc. This is a very old style of merging lathe programming.

The logic that determines when a tool change is needed between two consecutive operations is modified for lathe tooling and lathe tool carriers, or other machine tools.

Linked Operations - When cutting a shared cut region using two tools, two operations will be linked to share some of the pertinent cutting parameters and the common portion of the cut region. Among the parameters that preferably will be shared (linked) are: the cut strategy (cut pattern), level angle (cut angle), cut direction, cut depth, cut feed rate, spindle direction and speed.

The persistent storage of the synchronization data preferably is implemented such that it can be re-applied to the tool path of its respective operation, even when the operation tool path is regenerated. This could be considered 'smart' graphical editing.

In order to account for devices such as steady rest, tailstock or sub-spindles that are addressed in a separate channel (independent of the turrets), it is preferred that the group nodes in the machine tool view accept operations as direct child nodes. These child nodes are usually machine control operations without tool.

The following paragraphs will give a short overview of the interactive steps required to insert a synchronization mark and adjust its position on all channels, in a system in accordance with a disclosed embodiment. Here, it is assumed that the synchronization mark should be created for channels 1, 2 and 4.

First, the user selects a cell in the synchronization event list which matches the exact position of the new synchronization mark. By way of example, in this case, the user selects the cell in the first column, i.e. for channel 1. Selecting the cell will highlight the complete row on all channels.

Pressing an insert synchronization event button will open the synchronization mark dialog where the user can specify the options for this mark. In this case, the user selects channel 1 as technology leader and toggles on channels 2 and 4 as affected channels. Leaving the dialog with OK will show the synchronization event text in the same line in all affected channels.

Next, the user adjusts the position of the synchronization mark on channels 2 and 4. The most convenient way to do this is using drag & drop. Thus the user selects the synchronization event on channel 2 and drags it to the desired position which may be before or after the current position. Then he can do the same for channel 4.

As an alternative, the user can also adjust the position using cut & paste. In this case, he would select the synchronization mark on channel 2, hit the cut button, select the target position on channels 2 and hit the paste button. The same would be required to be done for channel 4.

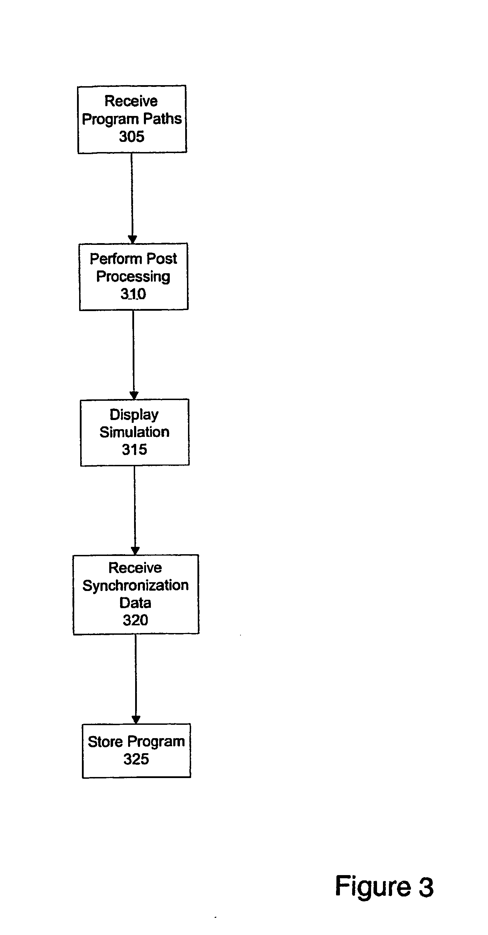

Figure 3 depicts a flowchart of an exemplary process performed by a data processing system in accordance with a disclosed embodiment.

First, the system receives program paths for at least two tools (step 305). Typically, this will be an interactive programming process by a user, but this step also considers loading previously-programmed paths from storage or another source. During the program/loading one the program path for one tool may be programmed at a time, or they can be programmed simultaneously.

Program paths for any number of tools can be loaded and processed as described herein.

The system performs a post-processing step on the tool path programs (step 310) to produce post-processed data. This processing can be implemented using conventional techniques.

The system displays a simulation of each tool and its behavior according to its tool path program as represented in the post-processed data (step 315). Each tool simulation can be displayed separately, or simulations of multiple tools can be displayed simultaneously. The simulation can comprise a complete three-dimensional graphical representation of any and all parts and their interaction, along with other relevant data, or can be simplified representations of the machines, carriers, tools, etc., as will be understood by those of skill in the art.

The system can then receive, from the user, synchronization data (step 320), edits to the individual tool path programs, and other instructions from the user.

It is important to note, here, that while the steps above are described and depicted in a sequential fashion, preferred embodiments provide that the system is performing all steps above substantially simultaneously. That is, as the user interactively enters and edits data, the system is constantly re-processing the paths and updating the simulation display, so that the user is able to see the results and consequences of his actions on a real time basis. In other embodiments, multiple ones of the steps above, but not all of them, are performed substantially simultaneously. For example, the primary programming or loading of the paths in step 305 may only occur once in a typical operation.

When the programming is complete (and optionally at other times), the completed programs are stored/exported in a form suitable for execution on NC machines, *e*.*g*., in industry standard format posted files (step 325).

Those skilled in the art will recognize that, for simplicity and clarity, the full structure and operation of all data processing systems suitable for use with the present invention is not being depicted or described herein. Instead, only so much of a data processing system as is unique to the present invention or necessary for an understanding of the present invention is depicted and described. The remainder of the construction and operation of the data processing system may conform to any of the various current implementations and practices known in the art. Those of skill in the art will understand which elements of the data processing system act as appropriate means for performing various functions.

It is important to note that while the present invention has been described in the context of a fully functional system, those skilled in the art will appreciate that at least portions of the mechanism of the present invention are capable of being distributed in the form of computer-executable instructions contained within a machine readable medium in any of a variety of forms, and that the present invention applies equally regardless of the particular type of instruction or signal bearing medium utilized to actually carry out the distribution. Examples of machine readable mediums include: nonvolatile, hard-coded type mediums such as read only memories (ROMs) or erasable, electrically programmable read only memories (EEPROMs), user-recordable type mediums such as floppy disks, hard disk drives and compact disk read only memories (CD-ROMs) or digital versatile disks (DVDs), and transmission type mediums such as digital and analog communication links.
The user could limit his tool path output to cycle statements and only insert sync marks at the operation level, an alternative that would work only in a limited set of geometric configurations.

## Claims

1. A method for developing numerically-controlled machine programs, comprising:
receiving (305) program paths for a plurality of machine tools;
performing (310) post processing on the program paths to produce post-processed data; displaying (315) a simulation of the operation of at least one machine tool according to the post-processed data;
receiving (320) synchronization data corresponding to the program paths; and
**characterized by** storing (325) the synchronization data separately from the program paths, wherein the synchronization data is automatically re-applied to the program path when the program path is edited or regenerated.

2. The method of claim 1, wherein at least two of the steps including performing, displaying, and receiving synchronization data are performed substantially simultaneously.

3. The method of claim 1, further comprising storing program files.

4. The method of claim 1, wherein the receiving steps include an interaction with a data processing system user.

5. The method of claim 1, wherein the simulation is displayed in real-time as the synchronization data is received.

6. The method of claim 1, wherein the plurality of machine tools are tools controlled by a numerically-controlled machine.

7. The method of claim 1, wherein the plurality of machine tools includes a vertical turret lathe.

8. A data processing system (210) having at least a processor (102) and accessible memory (108), comprising:
means for receiving program paths for a plurality of machine tools (240, 245);
means for performing post processing on the program paths to produce post-processed data;
means for displaying a simulation of the operation of at least one machine tool (240, 245) according to the post-processed data;
means for receiving synchronization data corresponding to the program paths; and
**characterized by** means for storing the synchronization data separately from the program paths, wherein the synchronization data is automatically re-applied to the program path when the program path is edited or regenerated.

9. The data processing system of claim 8, wherein at least two of the means operate substantially simultaneously.

10. The data processing system of claim 8, further comprising means for storing program files.

11. The data processing system of claim 8, wherein the means for receiving include a user input device.

12. The data processing system of claim 8, wherein the simulation is displayed in real-time as the synchronization data is received.

13. The data processing system of claim 8, wherein the plurality of machine tools are tools controlled by a numerically-controlled machine.

14. The data processing system of claim 8, wherein the plurality of machine tools includes a vertical turret lathe.

15. A computer program product tangibly embodied in a machine-usable medium, comprising:
computer-executable instructions for receiving program paths for a plurality of machine tools;
computer-executable instructions for performing post processing on the program paths to produce post-processed data;
computer-executable instructions for displaying a simulation of the operation of at least one machine tool according to the post-processed data;
computer-executable instructions for receiving synchronization data corresponding to the program paths; and
**characterized by** computer-executable instructions for storing (325) the synchronization data separately from the program paths, wherein the synchronization data is automatically re-applied to the program path when the program path is edited or regenerated.

16. The computer program product of claim 15, wherein at least two of the computer-executable instructions for performing, displaying, and receiving synchronization data are executed substantially simultaneously.

17. The computer program product of claim 15, further comprising computer-executable instructions for storing program files.

18. The computer program product of claim 15, wherein the computer-executable instructions for receiving include instructions for an interaction with a data processing system user.

19. The computer program product of claim 15, wherein the simulation is displayed in real-time as the synchronization data is received.

20. The computer program product of claim 15, wherein the plurality of machine tools are tools controlled by a numerically-controlled machine.

21. The computer program product of claim 15, wherein the plurality of machine tools includes a vertical turret lathe.

## Patentansprüche

1. Verfahren zum Entwickeln von Programmen für numerisch gesteuerte Maschinen, das aufweist:
Empfangen (305) von Programmpfaden für eine Vielzahl von Maschinenwerkzeugen;
Durchführen (310) einer Nachverarbeitung für die Programmpfade, um nachverarbeitete Daten zu erzeugen;
Anzeigen (315) einer Simulation des Betriebs wenigstens eines Maschinenwerkzeugs entsprechend den nachverarbeiteten Daten;
Empfangen (320) von zu den Programmpfaden gehörigen Synchronisationsdaten; und
**gekennzeichnet durch** Speichern (325) der Synchronisationsdaten getrennt von den Programmpfaden, wobei die Synchronisationsdaten automatisch erneut auf den Programmpfad angewendet werden, wenn der Programmpfad editiert oder erneut erzeugt wird.

2. Verfahren gemäß Anspruch 1, wobei wenigstens zwei der Schritte einschließlich des Durchführens, Anzeigens und Empfangens von Synchronisationsdaten im Wesentlichen gleichzeitig durchgeführt werden.

3. Verfahren gemäß Anspruch 1, das ferner das Speichern von Programmdateien aufweist.

4. Verfahren gemäß Anspruch 1, wobei die Empfangsschritte eine Interaktion mit einem Nutzer des Datenverarbeitungssystems umfassen.

5. Verfahren gemäß Anspruch 1, wobei die Simulation in Echtzeit angezeigt wird, während die Synchronisationsdaten empfangen werden.

6. Verfahren gemäß Anspruch 1, wobei die Vielzahl von Maschinenwerkzeugen Werkzeuge sind, die von einer numerisch gesteuerten Maschine gesteuert werden.

7. Verfahren gemäß Anspruch 1, wobei die Vielzahl von Maschinenwerkzeugen eine vertikale Revolverdrehmaschine umfasst.

8. Datenverarbeitungssystem (210) mit wenigstens einem Prozessor (102) und Zugriffsspeicher (108), das aufweist:
Mittel zum Empfangen von Programmpfaden für eine Vielzahl von Maschinenwerkzeugen (240, 245);
Mittel zum Ausführen einer Nachverarbeitung für die Programmpfade, um nachverarbeitete Daten zu erzeugen;
Mittel zum Anzeigen einer Simulation des Betriebs wenigstens eines Maschinenwerkzeugs (240, 245) entsprechend den nachverarbeiteten Daten; Mittel zum Empfangen von zu den Programmpfaden gehörigen Synchronisationsdaten; und
**gekennzeichnet durch** Mittel zum Speichern der Synchronisationsdaten getrennt von den Programmpfaden, wobei die Synchronisationsdaten automatisch erneut auf den Programmpfad angewendet werden, wenn der Programmpfad editiert oder erneut erzeugt wird.

9. Datenverarbeitungssystem gemäß Anspruch 8, wobei wenigstens zwei der Mittel im Wesentlichen gleichzeitig arbeiten.

10. Datenverarbeitungssystem gemäß Anspruch 8, das ferner Mittel zum Speichern von Programmdateien aufweist.

11. Datenverarbeitungssystem gemäß Anspruch 8, wobei die Empfangsmittel eine Benutzereingabevorrichtung umfassen.

12. Datenverarbeitungssystem gemäß Anspruch 8, wobei die Simulation in Echtzeit angezeigt wird, während die Synchronisationsdaten empfangen werden.

13. Datenverarbeitungssystem gemäß Anspruch 8, wobei die Vielzahl von Maschinenwerkzeugen Werkzeuge sind, die von einer numerisch gesteuerten Maschine gesteuert werden.

14. Datenverarbeitungssystem gemäß Anspruch 8, wobei die Vielzahl von Maschinenwerkzeugen eine vertikale Revolverdrehmaschine umfasst.

15. Computerprogrammprodukt, das konkret in einem maschinennutzbaren Medium ausgeführt ist, das aufweist:
computerausführbare Anweisungen zum Empfangen von Programmpfaden von einer Vielzahl von Maschinenwerkzeugen;
computerausführbare Anweisungen zum Durchführen einer Nachverarbeitung für die Programmpfade, um nachverarbeitete Daten zu erzeugen; computerausführbare Anweisungen zum Anzeigen einer Simulation des Betriebs wenigstens eines Maschinenwerkzeugs entsprechend den nachverarbeiteten Daten;
computerausführbare Anweisungen zum Empfangen von zu den Programmpfaden gehörigen Synchronisationsdaten; und
**gekennzeichnet durch** computerausführbare Anweisungen zum Speichern (325) der Synchronisationsdaten getrennt von den Programmpfaden, wobei die Synchronisationsdaten automatisch erneut auf den Programmpfad angewendet werden, wenn der Programmpfad editiert oder erneut erzeugt wird.

16. Computerprogrammprodukt gemäß Anspruch 15, wobei wenigstens zwei der computerausführbaren Anweisungen zum Durchführen, Anzeigen und Empfangen von Synchronisationsdaten im Wesentlichen gleichzeitig ausgeführt werden.

17. Computerprogrammprodukt gemäß Anspruch 15, das ferner computerausführbare Anweisungen zum Speichern von Programmdateien aufweist.

18. Computerprogrammprodukt gemäß Anspruch 15, wobei die computerausführbaren Anweisungen zum Empfangen Anweisungen für eine Interaktion mit einem Nutzer des Datenverarbeitungssystems umfassen.

19. Computerprogrammprodukt gemäß Anspruch 15, wobei die Simulation in Echtzeit angezeigt wird, während die Synchronisationsdaten empfangen werden.

20. Computerprogrammprodukt gemäß Anspruch 15, wobei die Vielzahl von Maschinenwerkzeugen Werkzeuge sind, die von einer numerisch gesteuerten Maschine gesteuert werden.

21. Computerprogrammprodukt gemäß Anspruch 15, wobei die Vielzahl von Maschinenwerkzeugen eine vertikale Revolverdrehmaschine umfasst.

## Revendications

1. Procédé de développement de programmes pour machines à commande numérique, comprenant :
la réception (305) de chemins de programmes pour une pluralité de machines-outils ;
l'exécution (310) d'un post-traitement sur les chemins de programmes pour produire des données post-traitées ;
l'affichage (315) d'une simulation du fonctionnement d'au moins une machine-outil en fonction des données post-traitées ;
la réception (320) de données de synchronisation correspondant aux chemins de programmes ; et
**caractérisé par** le stockage (325) des données de synchronisation séparément des chemins de programmes, dans lequel les données de synchronisation sont automatiquement réappliquées au chemin de programme lorsque le chemin de programme est édité ou régénéré.

2. Procédé selon la revendication 1, dans lequel au moins deux des étapes incluant l'exécution, l'affichage, et la réception de données de synchronisation sont exécutées sensiblement simultanément.

3. Procédé selon la revendication 1, comprenant en outre le stockage de fichiers de programmes.

4. Procédé selon la revendication 1, dans lequel les étapes de réception incluent une interaction avec un utilisateur d'un système de traitement de données.

5. Procédé selon la revendication 1, dans lequel la simulation est affichée en temps réel alors que les données de synchronisation sont reçues.

6. Procédé selon la revendication 1, dans lequel la pluralité de machines-outils sont des outils commandés par une machine à commande numérique.

7. Procédé selon la revendication 1, dans lequel la pluralité de machines-outils inclut un tour à tourelle vertical.

8. Système de traitement de données (210) ayant au moins un processeur (102) et une mémoire accessible (108), comprenant :
un moyen pour recevoir des chemins de programmes pour une pluralité de machines-outils (240, 245) ;
un moyen pour exécuter un post-traitement sur les chemins de programmes pour produire des données post-traitées ;
un moyen pour afficher une simulation du fonctionnement d'au moins une machine-outil (240, 245) en fonction des données post-traitées ;
un moyen pour recevoir des données de synchronisation correspondant aux chemins de programmes ; et
**caractérisé par** un moyen pour stocker les données de synchronisation séparément des chemins de programmes, dans lequel les données de synchronisation sont automatiquement réappliquées au chemin de programme lorsque le chemin de programme est édité ou régénéré.

9. Système de traitement de données selon la revendication 8, dans lequel au moins deux des moyens fonctionnent sensiblement simultanément.

10. Système de traitement de données selon la revendication 8, comprenant en outre un moyen pour stocker des fichiers de programmes.

11. Système de traitement de données selon la revendication 8, dans lequel le moyen pour recevoir inclut un dispositif d'entrée pour un utilisateur.

12. Système de traitement de données selon la revendication 8, dans lequel la simulation est affichée en temps réel alors que les données de synchronisation sont reçues.

13. Système de traitement de données selon la revendication 8, dans lequel la pluralité de machines-outils sont des outils commandés par une machine à commande numérique.

14. Système de traitement de données selon la revendication 8, dans lequel la pluralité de machines-outils inclut un tour à tourelle vertical.

15. Produit de programme informatique intégré de façon tangible dans un support utilisable par une machine, comprenant :
des instructions exécutables par un ordinateur pour recevoir des chemins de programmes pour une pluralité de machines-outils ;
des instructions exécutables par un ordinateur pour exécuter un post-traitement sur les chemins de programmes pour produire des données post-traitées ;
des instructions exécutables par un ordinateur pour afficher une simulation du fonctionnement d'au moins une machine-outil en fonction des données post-traitées ;
des instructions exécutables par un ordinateur pour recevoir des données de synchronisation correspondant aux chemins de programmes ; et
**caractérisé par** des instructions exécutables par un ordinateur pour stocker (325) les données de synchronisation séparément des chemins de programmes, dans lequel les données de synchronisation sont automatiquement réappliquées au chemin de programme lorsque le chemin de programme est édité ou régénéré.

16. Produit de programme informatique selon la revendication 15, dans lequel au moins deux des instructions exécutables par un ordinateur pour exécuter, afficher, et recevoir des données de synchronisation sont exécutées sensiblement simultanément.

17. Produit de programme informatique selon la revendication 15, comprenant en outre des instructions exécutables par un ordinateur pour stocker des fichiers de programmes .

18. Produit de programme informatique selon la revendication 15, dans lequel les instructions exécutables par un ordinateur pour recevoir incluent des instructions pour une interaction avec un utilisateur d'un système de traitement de données.

19. Produit de programme informatique selon la revendication 15, dans lequel la simulation est affichée en temps réel alors que les données de synchronisation sont reçues.

20. Produit de programme informatique selon la revendication 15, dans lequel la pluralité de machines-outils sont des outils commandés par une machine à commande numérique.

21. Produit de programme informatique selon la revendication 15, dans lequel la pluralité de machines-outils inclut un tour à tourelle vertical.
